# FASCICULE DE BREVET EUROPEEN

(11) **EP 1 859 308 B1**
(45) Date de publication et mention de la délivrance du brevet: **28.04.2010**
(21) Numéro de dépôt: 06726238.6
(22) Date de dépôt: 10.03.2006
(51) Int. Cl.: G02B 7/00, G01J 3/06, G02B 7/16

(54) **Dispositif de positionnement d'éléments optiques à butée rétractable et sans frottement**
Reibungslose Positionierungseinrichtung optischer Elemente mit zurückziehbarem Anschlag
Optical element positioning device with retractable stop and without friction

(30) Priorité: 10.03.2005 FR 0550630
(43) Date de publication de la demande: 28.11.2007
(73) Titulaire: Horiba Jobin Yvon S.A.S., 91160 Longjumeau (FR)
(72) Inventeur: BOIDIN, René, F-59155 Faches-thumesnil (FR); FAVEEUW, Christophe, F-62119 Dourges (FR); FROIGNEUX, Emmanuel, F-59650 Villeneuve D'ascq (FR)
(74) Mandataire: Michelet, Alain
(86) Numéro de dépôt international: PCT/FR2006/050214
(87) Numéro de publication internationale: WO 2006/095116

(56) Documents cités:
- US-A- 3 822 941
- US-A- 4 866 477
- US-A- 5 280 338
- US-A- 5 767 965

## Description

L'invention concerne un dispositif de positionnement d'éléments optiques à butée rétractable permettant le positionnement de l'un d'au moins deux éléments optiques avec une grande précision et un spectromètre l'incorporant.

On entend par éléments optiques des éléments tels que des réseaux de diffraction, des filtres, des miroirs, etc... nécessitant une grande précision pour leur orientation et une grande stabilité une fois qu'ils sont positionnés.

Ces éléments sont généralement utilisés dans des dispositifs spectrométriques pour spectromètres Raman ou autres dans lesquels l'un de ces éléments est orienté sur le chemin d'un faisceau optique incident.

On connaît des dispositifs à tourelle comme ceux des brevets US 5 280 338 et US 5 767 965 qui permettent de sélectionner l'un des éléments optiques supportés par la tourelle, pour la placer sur un chemin optique prédéterminé.

Cette tourelle est mobile en rotation autour d'un axe par rapport à un bâti et permet de positionner l'un des éléments optiques qu'elle porte. Elle est solidaire d'un pignon assurant son entraînement.

Dans le brevet US 5 767 965, le pignon comprend des moyens de blocage sur sa surface périphérique qui permettent, à l'aide d'un doigt de blocage, de bloquer la tourelle de façon à ce qu'un faisceau optique se réfléchisse sur un élément optique sélectionné.

Le document US 4,866,477 divulgue encore un autre dispositif de positionement.

Après de multiples sélections d'éléments optiques et de multiples blocages, le dispositif de blocage fini par avoir du jeu dû à l'usure des pièces généralement métalliques, frottant les unes sur les autres.

L'usure des pièces métalliques est particulièrement gênante dans les dispositifs optiques puisque des particules métalliques sont susceptibles de venir se déposer sur les éléments optiques, entraînant une perturbation de la mesure.

De plus, le jeu dans le dispositif de blocage engendre une moins bonne stabilité des éléments optiques et par conséquent des mesures par les spectromètres moins précises et moins reproductibles.

Ainsi, l'objectif de la présente invention est de proposer un dispositif de positionnement d'éléments optiques à butée rétractable permettant le positionnement de l'un d'au moins deux éléments optiques avec une grande précision, sans jeu possible et sans usure des pièces.

A cet effet, l'invention concerne un dispositif de positionnement d'éléments optiques à butée rétractable permettant le positionnement précis d'un élément optique sélectionné parmi une pluralité d'éléments optiques, comprenant :
- un bâti;
- une tourelle munie d'un porte éléments portant ladite pluralité d'éléments optiques, et d'un disque solidaire du porte-éléments, ledit disque étant une roue à rochet ayant une surface périphérique munie d'une pluralité de moyens de blocage, chaque moyen de blocage correspondant à un élément optique,
- un moteur apte à entraîner ledit disque en rotation par rapport audit bâti autour d'un premier axe dans un sens dit direct et dans un sens inverse ; et,
- une butée d'arrêt appuyée contre la surface périphérique du disque et apte à se rétracter par déplacement autour d'un deuxième axe lors de l'actionnement dudit moteur pour entraîner le disque dans le sens direct, ladite butée d'arrêt étant apte à s'engager avec un moyen de blocage de manière à bloquer ledit disque en position lors de l'actionnement du moteur pour entraîner le disque dans le sens opposé.

Selon l'invention, la butée d'arrêt comprend un élément anti-frottement en contact avec la surface périphérique de la roue à rochet de sorte que la butée rétractable se déplace en fonction du relief de la surface périphérique de la roue à rochet sans frottement.

Dans différents modes de réalisation possibles, la présente invention concerne également les caractéristiques suivantes qui pourront être considérées isolément ou selon toutes leurs combinaisons techniquement possibles et apportent chacune des avantages spécifiques :
- l'élément anti-frottement est une roulette libre en rotation autour d'un axe,
- les moyens de blocage de la roue à rochet comprennent un évidement en forme de demi-cylindre, apte à permettre l'encastrement de ladite roulette dans ledit évidement lorsque le disque est en position bloquée,
- la butée d'arrêt comprend une demi-sphère de contact à l'une de ses extrémités et à proximité de la roulette, ladite demi-sphère de contact venant s'appuyer sur la surface du moyen de blocage lorsque le disque est en position bloquée,
- lorsque le disque est bloqué en position par engagement de la butée d'arrêt et du moyen de blocage, la butée d'arrêt est contre bloquée par une contre butée fixée au bâti de sorte que la sollicitation sur le deuxième axe soit éliminée, ladite butée d'arrêt jouant alors le rôle d'une cale d'épaisseur entre le disque et la contre butée,
- un contacteur commande le moteur et son sens de rotation selon l'orientation du porte-éléments,
- le moteur est un moteur fonctionnant en courant continu générant deux sens de rotation, un premier sens de rotation pour le choix de l'élément optique actif et un deuxième sens de rotation pour l'orientation précise de la tourelle,
- le circuit de commande du moteur comporte une diode montée en parallèle avec une première résistance, une seconde résistance montée en série avec l'ensemble formé de la première résistance et de la diode, ladite diode court-circuitant la première résistance pour le deuxième sens de rotation, de sorte à réduire de couple de maintien du moteur lorsque le disque est bloqué.

L'invention concerne également un système spectrométrique comprenant une fente d'entrée, au moins deux éléments optiques à sélectionner, un orifice de sortie et des miroirs de sorte qu'un faisceau lumineux provenant de la fente d'entrée est réfléchi sur l'élément optique sélectionné et dirigé vers l'orifice de sortie.

Selon l'invention, le spectromètre comprend au moins un dispositif de positionnement d'éléments optiques à butée rétractable comportant les éléments optiques.

Dans un mode de réalisation préféré, les éléments optiques sont des réseaux de diffraction.

L'invention concerne également un procédé selon la revendication 11 de positionnement précis d'un élément optique sélectionné parmi une pluralité d'éléments optiques portés par un porte élément dont est muni une tourelle apte à être entraînée, par un moteur, en rotation autour d'un premier axe dans un sens dit direct et dans un sens inverse par rapport à un bâti fixe, la tourelle étant également munie d'un disque formant une roue à rochet et ayant une surface périphérique munie d'une pluralité de moyens de blocage, chaque moyen de blocage correspondant à un élément optique, comportant une première étape consistant à actionner le moteur pour entraîner la rotation de la tourelle dans le sens direct pour sélectionner l'élément optique actif, une butée d'arrêt appuyée contre la surface périphérique du disque se rétractant alors par déplacement autour d'un deuxième axe, et une deuxième étape consistant à actionner le moteur pour entraîner la rotation de la tourelle dans le sens inverse.

Selon l'invention, la butée rétractable se déplace en fonction du relief de la surface périphérique de la roue à rochet sans frottement.

Dans un mode de réalisation préféré, lorsque la butée d'arrêt s'engage entre un moyen de blocage de la surface périphérique du disque et une contre butée fixée au bâti, la sollicitation sur le deuxième axe est éliminée, ladite butée d'arrêt jouant alors le rôle d'une cale d'épaisseur entre le disque et la contre butée, ladite tourelle étant ainsi bloquée dans une position précise..

L'invention sera décrite plus en détail en référence aux dessins annexés dans lesquels :
- La figure 1 est une représentation de l'invention selon un premier mode de réalisation ;
- La figure 2 est une représentation détaillée de l'invention selon un premier mode de réalisation ;
- La figure 3 est une représentation du schéma électrique du circuit de commande selon l'invention ;
- La figure 4 est une représentation de la butée selon un premier mode de réalisation de l'invention ;
- La figure 5 est une représentation du moyen de blocage selon un premier mode de réalisation de l'invention ;
- La figure 6 est une représentation d'une tourelle Notch selon un deuxième mode de réalisation de l'invention ;
- La figure 7 est une représentation schématique de l'invention selon un troisième mode de réalisation de l'invention ;
- La figure 8 est une représentation d'un système spectrométrique pour spectromètre Raman selon le premier ou le deuxième mode de réalisation de l'invention ;

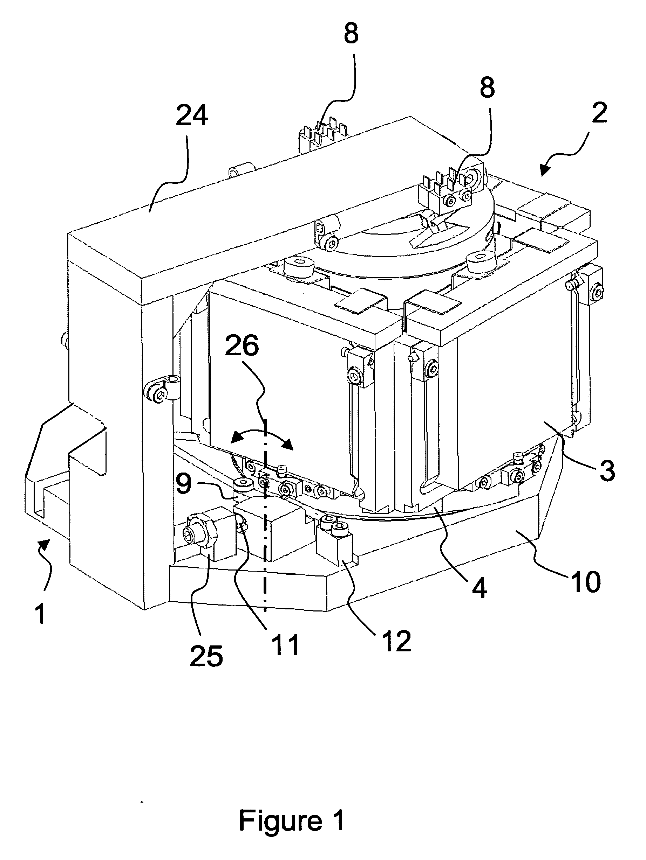

La figure 1 est une représentation de l'invention selon un premier mode de réalisation. Elle montre un dispositif à butée rétractable permettant le positionnement de l'un d'au moins deux éléments optiques avec une grande précision. Le dispositif à butée rétractable comprend un bâti 1 composé d'un socle 10 et d'un bras 24.

Il comprend également une tourelle 2 comportant un porte éléments 3 pouvant supporter au moins deux éléments optiques. La tourelle 2 est mobile en rotation autour d'un axe de façon à positionner l'un des éléments optiques sélectionné devant un faisceau lumineux 22 de façon à ce qu'il soit réfléchi ou transmis.

Sur la figure 1, la tourelle 2 est particulièrement adaptée pour des éléments optiques, tels des réseaux de diffraction, réfléchissant le faisceau lumineux 22.

Le dispositif à butée rétractable comprend un disque 4 solidaire du porte-éléments 3. Le disque 4 présente une surface périphérique 5 et au moins deux moyens de blocage 6 sur cette surface périphérique. Chaque moyen de blocage 6 correspond à un élément optique. Sur les figures 1 à 6, le disque 4 du dispositif selon l'invention comporte quatre moyens de blocage correspondant à quatre éléments optiques 23.

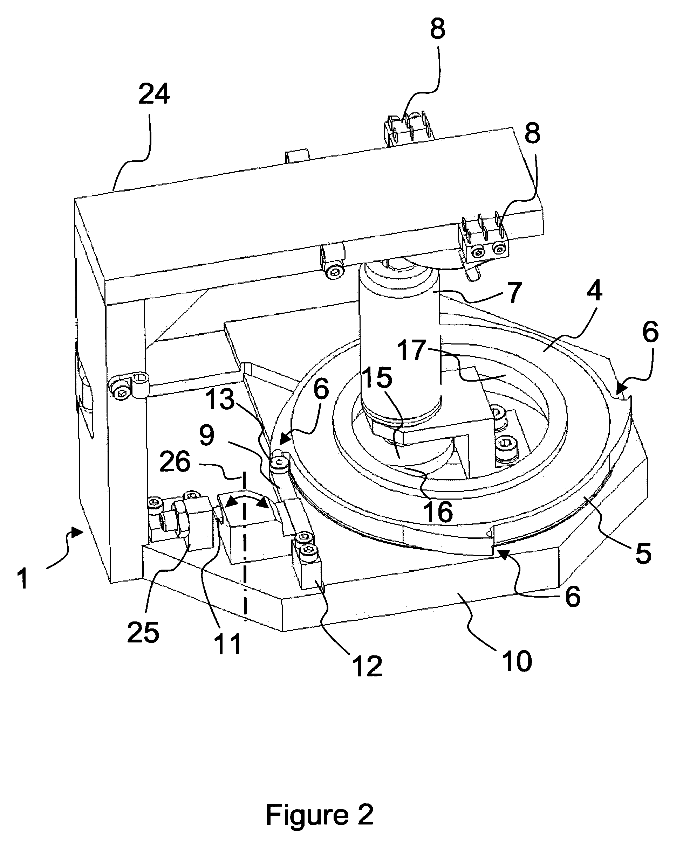

Un moteur 7, représenté sur la figure 2, solidaire au bâti 1 , entraîne la tourelle 2 par rapport au bâti 1. Un galet 15, pouvant avoir un engrenage externe 16, transfère le couple du moteur 7 à la roue à rochet 4 qui comprend un engrenage interne 17 en contact avec l'engrenage externe 16 du galet 15.

Le moteur 7 fonctionne en courant continu générant deux sens de rotation, un premier sens de rotation pour le choix de l'élément optique actif et un deuxième sens de rotation pour l'orientation précise de la tourelle 2. L'orientation précise de la tourelle 2 comprend une étape de blocage décrite ci-dessous.

Une butée d'arrêt 9 de la tourelle est mobile, par rapport au socle 10, autours d'un axe de façon à former une butée rétractable. La butée 9 se contracte ou se rétracte suivant le relief de la surface périphérique 5 du disque 4. La butée 9 est reliée à un ressort 11 fixé à un élément 25 du bâti 1. Ce ressort 11 agit en compression de façon à appuyer la butée 9 contre la surface périphérique 5 du disque 4.

Le disque 4 est une roue à rochet coopérant avec la butée d'arrêt 9. La butée 9 se rétracte lors de la rotation du disque 4 dans le sens direct et bloque le disque 4 de façon à positionner avec une grande précision un des éléments optiques lors de la rotation du disque 4 en sens inverse.

Le dispositif à butée rétractable comprend un contacteur 8 qui commande le moteur 7 ainsi que son sens de rotation selon l'orientation du porte-éléments 3. Selon un premier mode de réalisation de l'invention représenté sur les figures 1 à 5, ce contacteur 8 est fixé sur la partie supérieure du bras 24 du bâti 1. Il permet de repérer la position des éléments optiques par rapport à la butée 9.

Dans le sens direct de rotation de la tourelle 2, lorsque la butée 9 dépasse un moyen de blocage 6 de la roue à rochet 4, elle se rétracte. Parallèlement, le contacteur 8 commande au moteur 7 une rotation de la tourelle 2 en sens inverse de façon à ce que la butée 9 vienne s'appuyer contre le moyen de blocage 6 du disque 4. Le disque est maintenu bloqué par le moteur 7 qui continu à entraîner la tourelle 2 dans le sens de rotation inverse.

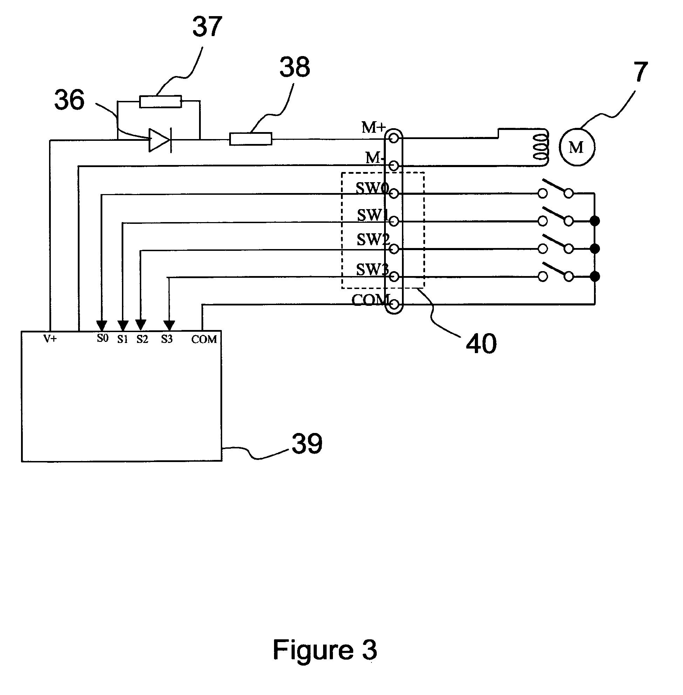

La figure 3 représente le schéma électrique du circuit de commande du moteur 7 comportant une diode 36 montée en parallèle avec une première résistance 37, une seconde résistance 38 montée en série avec l'ensemble formé de la première résistance 37 et de la diode 36, une carte de commande 39 et un ensemble de contacteurs 40.

Si les contacteurs SW0, SW1, SW2 et SW3 sont ouverts, V₊>V₋ le moteur 7 tourne dans un sens.

Si l'un des contacteurs SW0, SW1, SW2 et SW3 est fermé, V₊<V₋, le moteur 7 change de sens.

Dans le sens de rotation direct (le sens permettant le changement des éléments optiques) la résistance 37 est court-circuitée. La résistance 38 seule permet de limiter le courant dans le moteur 7. Cette résistance 38 a une valeur faible afin de ne pas trop réduire le couple du moteur 7.

Dans l'autre sens de rotation (le sens permettant le positionnement en butée), les résistances 37 et 38 en série permettent de limiter le courant dans le moteur 7 et donc de diminuer le couple de maintien du moteur 7 lorsque le dispositif est bloqué en butée. La valeur de la résistance 37 est optimisée selon le couple de maintien désiré.

Le moteur 7 peut comprendre un réducteur de vitesse.

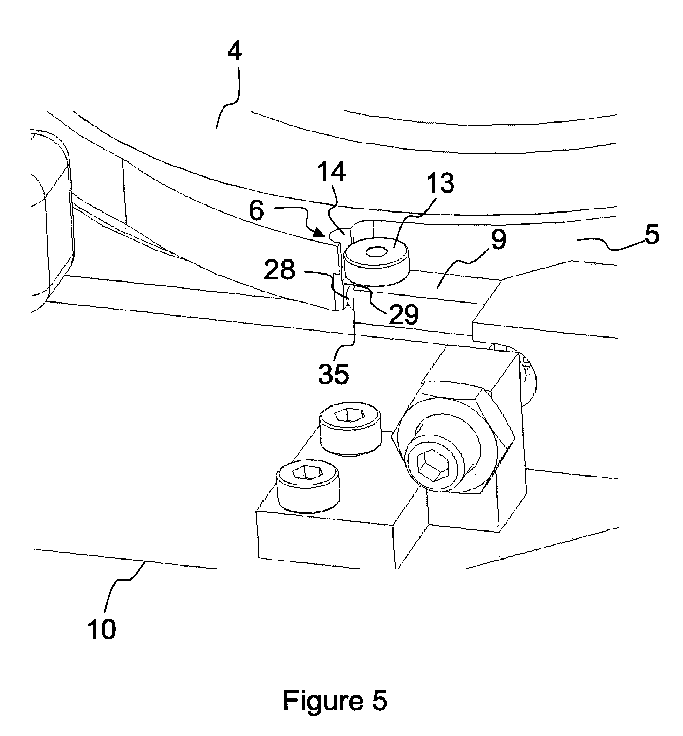

Lorsque la tourelle 2 est bloquée, la butée 9 est contre bloquée par une contre butée 12 fixée au socle 10 du bâti 1. Dans la direction de la force de maintien, il n'y a aucun jeu mécanique. La contre butée 12 maintient l'ensemble butée 9 et disque 4 sans jeu possible. Elle permet d'éliminer la sollicitation du disque sur l'axe 26 autour duquel la butée 9 est mobile. Le disque 4 engendre une force parallèle à la butée 9, dirigée vers la contre butée 12. Sans contre butée 12, cette force entraîne la déformation de l'axe 26 provoquant du jeu dans le blocage de la tourelle 2. La position des éléments optiques devient moins précise. Les éléments optiques d'un spectromètre sur la figure 5 peuvent alors bouger pendant les mesures qui deviennent aussi moins précises et moins reproductibles. La précision de repositionnement n'est dépendante que de la déformation des éléments 4, 9 et 12. Ces éléments sont fabriqués dans un matériau résistant afin de limiter les déformations. La butée joue le rôle d'une cale d'épaisseur entre le disque 4 et la contre butée 12.

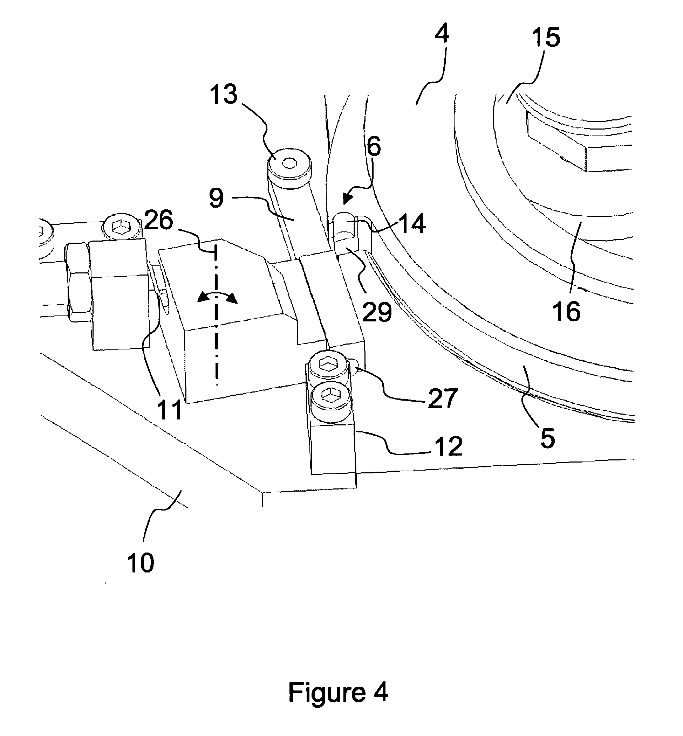

Les figures 4 et 5 montrent les deux extrémités de la butée 9 avec plus de détails. Chacune de ses extrémités comprend sur sa surface une demi-sphère 27 et 28 de contact avec la surface de la contre butée et la surface 29 du moyen de blocage du disque respectivement.

Ces demi-sphères 27 et 28 sont en matériau dur de type acier. Elles minimisent la surface de contact entre la butée 9 et les surfaces sur lesquelles elle s'appuie de sorte à minimiser les frottements. Le mouvement de la butée 9 est plus fluide. La minimisation des frottements réduit la quantité de débris ou de poussières métalliques sur les éléments optiques.

La butée 9 comprend un élément anti-frottement 13, à l'une de ses extrémités, en contact avec la surface périphérique 5 de la roue à rochet de sorte que la butée rétractable 9 se rétracte et se contracte en fonction du relief de la surface périphérique 5 de la roue à rochet sans frottement. Autrement dit, la butée 9 se déplace suivant le relief de la surface périphérique 5 du disque 4 sans frottement. Ceci permet également de réduire la quantité de débris ou de poussières métalliques sur les éléments optiques, de réduire l'usure de la surface périphérique 5 du disque 4 et d'éviter l'usure des angles 35 de la butée.

Dans un mode de réalisation préféré, l'élément anti-frottement peut être une roulette 13 libre en rotation autour d'un axe.

Les surfaces 29 des moyens de blocage 6 de la roue à rochet comprennent un évidement 14 en forme de demi-cylindre adapté à la forme de la roulette 13. Lors du blocage de la tourelle 2, une partie de la roulette est encastrée dans l'évidemment 14 de façon à ce que la roulette ne soit pas en contact avec la surface 29 du moyen de blocage 6, le disque exerçant une force sur la butée 9. Ceci permet d'éviter la déformation de la roulette 13 lors du blocage de la tourelle 2.

La demi-sphère de contact 28 est située à proximité de la roulette 13 et elle vient s'appuyer sur la surface 29 du moyen de blocage lorsque le disque 4 est en position bloquée. La demi-sphère de contact 28 peut être en dessous ou au dessus de la roulette 13.

Les éléments optiques peuvent être des réseaux de diffraction, des filtres coupe-bandes (Notch, Edge,...), des miroirs,....

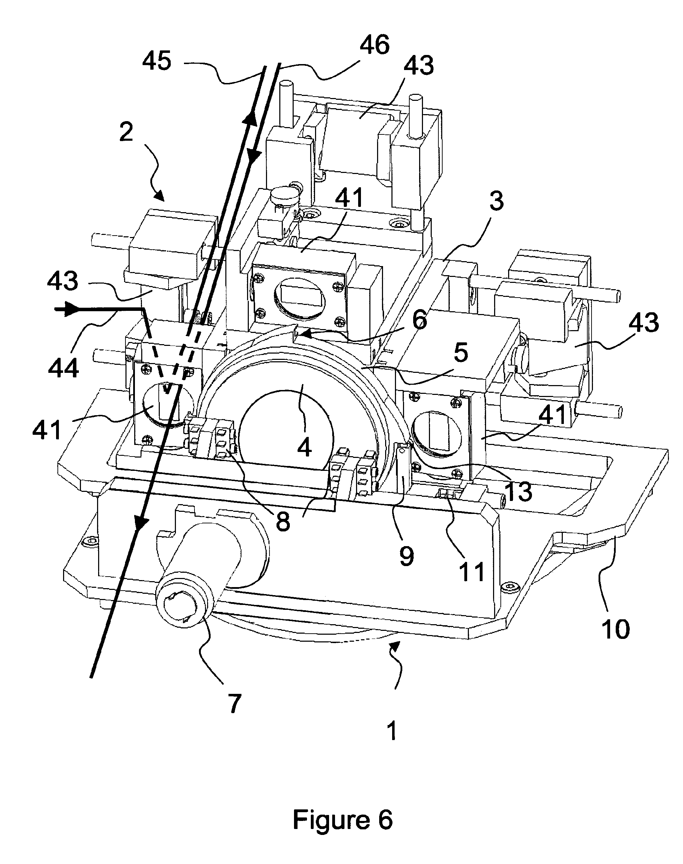

La figure 6 représente un dispositif de positionnement d'éléments optiques à butée rétractable pour filtre Raman Notch selon un deuxième mode de réalisation de l'invention. La tourelle 2 est communément appelée tourelle Notch. La figure 6 représente comme exemple une tourelle 2 comprenant quatre filtres Notch 41 associés à quatre miroirs 43. Seuls trois filtres Notch 41 et trois miroirs 43 sont visibles sur la figure 6. Les quatrième filtre et quatrième miroirs se situent en dessous du socle 10.

La surface du disque 4 est perpendiculaire au socle 10.

Lorsque la butée 9 bloque le disque 4, un filtre Raman Notch 41 et un miroir 43 sont sélectionnés. Ces éléments actifs se situent à gauche du disque 4.

Une source laser émet un faisceau laser 44 qui est réfléchi sur le miroir 43 vers le filtre Notch 41. Ce faisceau laser 44 est filtré dans un premier sens par le filtre Notch 41. Seul le rayonnement électromagnétique excitateur est réfléchi sur le filtre 41. Il en résulte un faisceau excitateur 45, dont la bande spectrale correspond à la longueur d'onde du rayonnement excitateur, se dirigeant vers l'échantillon. La bande spectrale complémentaire indésirable (raie Raman) est transmise par le filtre 41.

Le faisceau excitateur 45 éclaire l'échantillon qui réémet un rayonnement électromagnétique comprenant les informations spectrales caractéristiques de l'échantillon et la bande spectrale caractéristique de la raie Raman. Il en résulte un faisceau 46 se dirigeant en sens inverse du faisceau excitateur 45. Une partie de ce faisceau 46 comprenant la bande spectrale caractéristique de l'échantillon est transmise par le filtre 41 vers le spectrographe. Le rayonnement comprenant la bande spectrale d'excitation est réfléchi sur le filtre 41.

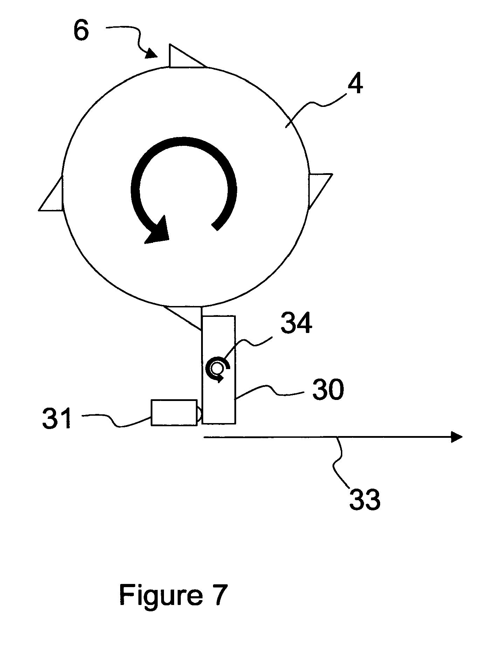

La figure 7 représente un troisième mode de réalisation de l'invention dans lequel la butée 30 et la contre butée 31 sont disposées différemment.

Le contacteur est fixé sur le socle du bâti, en contact avec la surface périphérique du disque.

La butée d'arrêt 30 de la tourelle est mobile autours d'un axe 34 de façon à former une butée rétractable.

Le disque 4 est une roue à rochet coopérant avec la butée d'arrêt 30. La butée 30 se rétracte lors de la rotation du disque 4 dans le sens direct et bloque le disque 4 de façon à positionner un des éléments optiques lors de la rotation du disque 4 en sens inverse.

La butée 30, contre bloquée par une contre butée 31, bloque le disque 4. La butée 30 exerce une force de maintien 33, sur la contre butée 31, perpendiculaire à la butée 30.

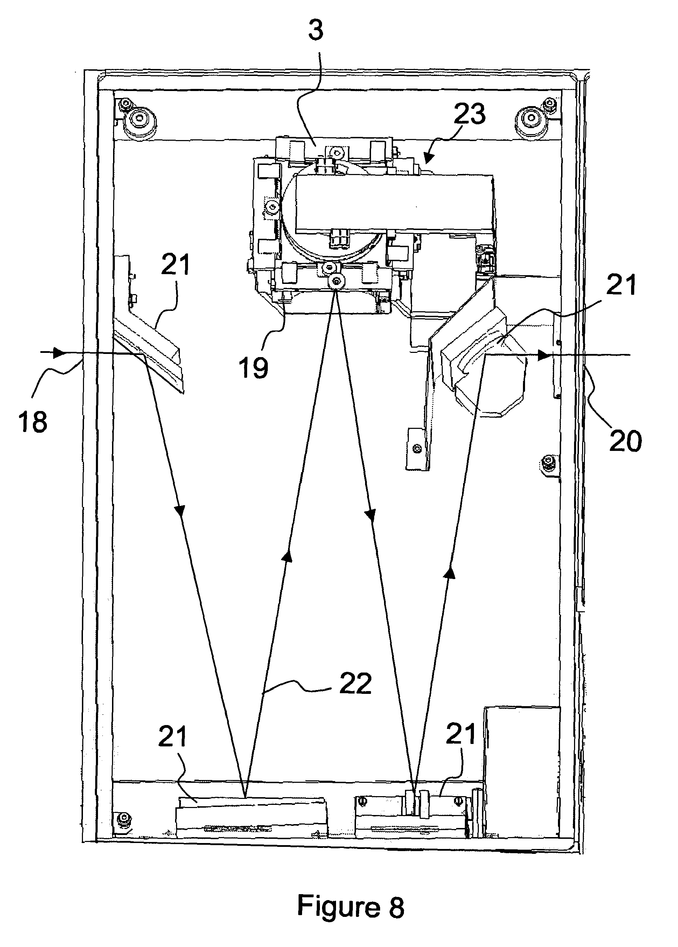

L'invention concerne également un système spectrométrique représenté sur la figure 8 comprenant une fente d'entrée, au moins deux éléments optiques à sélectionner, un orifice de sortie 18 et des miroirs 21 de sorte qu'un faisceau lumineux 22 provenant de la fente d'entrée 18 est réfléchi sur l'élément optique 19 sélectionné ou transmis à travers cet élément optique 19 sélectionné puis dirigé vers l'orifice de sortie 20.

Selon l'invention, il comprend au moins un dispositif à butée rétractable 23 comportant les éléments optiques.

Le dispositif à butée rétractable 23 permet de sélectionner un élément optique 19 d'au moins deux éléments de la tourelle 3.

Le dispositif à butée rétractable 23 peut être utilisé dans des systèmes spectrométriques de spectromètres de type Raman ou autres spectromètres nécessitant une grande précision pour l'orientation des éléments. Ces éléments peuvent être des éléments opto-mécaniques.

Ainsi, le dispositif à butée rétractable selon l'invention procure un repositionnement automatique et très précis des éléments optiques sélectionnés sans jeu possible (très stable). Les éléments constituant le dispositif sont moins sollicités par le frottement et s'usent donc moins. La durée de vie du dispositif est augmentée et les éléments optiques du système spectrométrique sont moins contaminés par les poussières ou les débris dus à l'usure.

## Revendications

1. Dispositif de positionnement d'éléments optiques à butée rétractable permettant le positionnement précis d'un élément optique sélectionné parmi une pluralité d'éléments optiques, comprenant :
- un bâti (1) ;
- une tourelle (2) munie d'un porte éléments (3) portant ladite pluralité d'éléments optiques, et d'un disque (4) solidaire du porte-éléments (3), ledit disque (4) étant une roue à rochet ayant une surface périphérique (5) munie d'une pluralité de moyens de blocage (6), chaque moyen de blocage (6) correspondant à un élément optique,
- un moteur (7) apte à entraîner ledit disque (4) en rotation par rapport audit bâti (1) autour d'un premier axe dans un sens dit direct et dans un sens inverse ; et,
- une butée d'arrêt (9) appuyée contre la surface périphérique du disque (5) et apte à se rétracter par déplacement autour d'un deuxième axe lors de l'actionnement dudit moteur (7) pour entraîner le disque (4) dans le sens direct, ladite butée d'arrêt (9) étant apte à s'engager avec un moyen de blocage (6) de manière à bloquer ledit disque (4) en position lors de l'actionnement du moteur (7) pour entraîner le disque (4) dans le sens opposé,
**caractérisé en ce que** la butée d'arrêt (9) comprend un élément anti-frottement (13) en contact avec la surface périphérique (5) de la roue à rochet de sorte que la butée rétractable (9) se déplace en fonction du relief de la surface périphérique (5) de la roue à rochet sans frottement.

2. Dispositif de positionnement d'éléments optiques à butée rétractable selon la revendication 1, **caractérisé en ce que** l'élément anti-frottement est une roulette (13) libre en rotation autour d'un axe.

3. Dispositif de positionnement d'éléments optiques à butée rétractable selon la revendication 2, **caractérisé en ce que** les moyens de blocage (6) de la roue à rochet comprennent un évidement (14) en forme de demi-cylindre, apte à permettre l'encastrement de ladite roulette (13) dans ledit évidement (14) lorsque le disque (4) est en position bloquée.

4. Dispositif de positionnement d'éléments optiques à butée rétractable selon l'une quelconque des revendications 1 à 3, **caractérisé en ce que** la butée d'arrêt (9) comprend une demi-sphère de contact (28) à l'une de ses extrémités et à proximité de la roulette (13), ladite demi-sphère de contact (28) venant s'appuyer sur la surface (29) du moyen de blocage lorsque le disque (4) est en position bloquée.

5. Dispositif de positionnement d'éléments optiques à butée rétractable selon l'une quelconque des revendications 1 à 4, **caractérisé en ce que** lorsque le disque (4) est bloqué en position par engagement de la butée d'arrêt (9) et du moyen de blocage (6), la butée d'arrêt (9) est contre bloquée par une contre butée (12) fixée au bâti (1) de sorte que la sollicitation sur le deuxième axe soit éliminée, ladite butée d'arrêt (9) jouant alors le rôle d'une cale d'épaisseur entre le disque (4) et la contre butée (12).

6. Dispositif de positionnement d'éléments optiques à butée rétractable selon l'une quelconque des revendications 1 à 5, **caractérisé en ce qu'**un contacteur (8) commande le moteur (7) et son sens de rotation selon l'orientation du porte-éléments (3).

7. Dispositif de positionnement d'éléments optiques à butée rétractable selon la revendication 6, **caractérisé en ce que** le moteur (7) est un moteur fonctionnant en courant continu générant deux sens de rotation, un premier sens de rotation pour le choix de l'élément optique actif et un deuxième sens de rotation pour l'orientation précise de la tourelle (2).

8. Dispositif de positionnement d'éléments optiques à butée rétractable selon la revendication 7, **caractérisé en ce que** le circuit de commande du moteur comporte une diode (36) montée en parallèle avec une première résistance (37), une seconde résistance (38) montée en série avec l'ensemble formé de la première résistance (37) et de la diode (36), ladite diode (36) court-circuitant la première résistance (37) pour le deuxième sens de rotation, de sorte à réduire de couple de maintien du moteur (7) lorsque le disque (4) est bloqué.

9. Système spectrométrique comprenant une fente d'entrée, au moins deux éléments optiques à sélectionner, un orifice de sortie (18) et des miroirs (21) de sorte qu'un faisceau lumineux (22) provenant de la fente d'entrée (18) est réfléchi sur l'élément optique sélectionné (19) et dirigé vers l'orifice de sortie (20), **caractérisé en ce qu'**il comprend au moins un dispositif de positionnement d'éléments optiques à butée rétractable selon l'une quelconque des revendications 1 à 8.

10. Spectromètre selon la revendication 9, **caractérisé en ce que** les éléments optiques sont des réseaux de diffraction.

11. Procédé de positionnement précis d'un élément optique sélectionné parmi une pluralité d'éléments optiques portés par un porte élément à l'aide du dispositif selon l'une quelconque des revendications 1 à 8, comportant une première étape consistant à actionner le moteur pour entraîner la rotation de la tourelle dans le sens direct pour sélectionner l'élément optique actif, une butée d'arrêt (9) appuyée contre la surface périphérique du disque se rétractant alors par déplacement autour d'un deuxième axe, et une deuxième étape consistant à actionner le moteur pour entraîner la rotation de la tourelle dans le sens inverse, **caractérisé en ce que** la butée rétractable (9) se déplace en fonction du relief de la surface périphérique (5) de la roue à rochet sans frottement.

12. Procédé de positionnement précis d'un élément optique selon la revendication 11, **caractérisée en ce que** lorsque la butée d'arrêt s'engage entre un moyen de blocage (6) de la surface périphérique du disque et une contre butée (12) fixée au bâti, la sollicitation sur le deuxième axe est éliminée, ladite butée d'arrêt (9) jouant alors le rôle d'une cale d'épaisseur entre le disque (4) et la contre butée (12), ladite tourelle étant ainsi bloquée dans une position précise.

## Claims

1. A device for the positioning of optical elements with retractable stop enabling accurate positioning of an optical element selected among a plurality of optical elements, comprising:
- a frame (1);
- a turret (2) provided with an element holder (3) carrying said plurality of optical elements, and with a disc (4) integral with the element holder (3), said disc (4) being a ratchet wheel having a peripheral surface (5) provided with a plurality of blocking means (6), each blocking means (6) corresponding to an optical element,
- a motor (7) suitable for driving said disc (4) in rotation relative to said frame (1) around a first axis in a so-called forward direction and in a reverse direction; and,
- an end stop (9) pressed against the peripheral surface of the disc (5) and capable of retracting by moving around a second axis when actuating said motor (7) for driving the disc (4) in the forward direction, said end stop (9) being capable of engaging with a blocking means (6) so as to block said disc (4) in position when actuating the motor (7) for driving the disc (4) in the opposite direction,
**characterised in that** the end stop (9) comprises an anti-friction element (13) in contact with the peripheral surface (5) of the ratchet wheel so that the retractable stop (9) moves according to the contour of the peripheral surface (5) of the ratchet wheel without any friction.

2. A device for the positioning of optical elements with retractable stop according to claim 1, **characterised in that** the anti-friction element is a caster (13) free to rotate around an axis.

3. A device for the positioning of optical elements with retractable stop according to claim 2, **characterised in that** the blocking means (6) of the ratchet wheel comprise a recess (14) in the form of a semi-cylinder, capable of enabling the nesting of said caster (13) into said recess (14) when the disc (4) is in blocked position.

4. A device for the positioning of optical elements with retractable stop according to any of the claims 1 to 3, **characterised in that** the end stop (9) comprises a contact semi-sphere (28) at one of its ends and close to the caster (13), wherein said contact semi-sphere (28) presses against the surface (29) of the blocking means when the disc (4) is in blocked position.

5. A device for the positioning of optical elements with retractable stop according to any of the claims 1 to 4, **characterised in that** when the disc (4) is blocked in position by engaging the end stop (9) and the blocking means (6), said end stop (9) is counter-blocked by a counter-stop (12) fixed to the frame (1) so that the stress exerted on the second axis is eliminated, said end stop (9) then acting as a shim between the disc (4) and the counter-stop (12).

6. A device for the positioning of optical elements with retractable stop according to any of the claims 1 to 5, **characterised in that** a contactor (8) commands the motor (7) and its rotational direction according to the orientation of the element holder (3).

7. A device for the positioning of optical elements with retractable stop according to claim 6, **characterised in that** the motor (7) is a motor operating in direct current generating two rotational directions, a first rotational direction for the selection of the active optical element and a second rotational direction for accurate orientation of the turret (2).

8. A device for the positioning of optical elements with retractable stop according to claim 7, **characterised in that** the command circuit of the motor comprises a diode (36) mounted in parallel with a first resistor (37), a second resistor (38) mounted in series with the assembly formed of the first resistance (37) and of the diode (36), said diode (36) short-circuiting the first resistor (37) for the second rotational direction, so as to reduce the holding torque of the motor (7) when the disc (4) is blocked.

9. A spectrometric system comprising an input slit, at least two optical elements to be selected, an output opening (18) and mirrors (21) so that a light beam (22) from the input slit (18) is reflected on the optical element selected (19) and directed toward the output opening (20),
**characterised in that** it comprises at least one device for the positioning of optical elements with retractable stop according to any of claims 1 to 8.

10. A spectrometer according to claim 9, **characterised in that** the optical elements are diffraction gratings.

11. A method for accurate positioning of an optical element selected among a plurality of optical elements carried by an element holder using a device according to any of claims 1 to 8, comprising a first step of actuating the motor for driving the rotation of the turret in the forward direction for selecting the active optical element, an end stop (9) pressing against the peripheral surface of the disc then retracting by moving around a second axis, and a second step of actuating the motor for driving the rotation of the turret in the reverse direction,
**characterised in that** the retractable stop (9) moves according to the contour of the peripheral surface (5) of the ratchet wheel without any friction.

12. A method for accurate positioning of an optical element according to claim 11, **characterised in that** when the stop engages between a blocking means (6) pressed against the peripheral surface of the disc and a counter-stop (12) fixed to the frame, the stress exerted on the second axis is eliminated, said end stop (9) then acting as a shim between the disc (4) and the counter-stop (12), said turret then being blocked in an accurate position.

## Patentansprüche

1. Positionierungseinrichtung optischer Elemente mit zurückziehbarem Anschlag, die die genaue Positionierung eines unter mehreren optischen Elementen ausgesuchten optischen Elements ermöglicht und die Folgendes umfasst:
- ein Gestell (1);
- einen Revolver (2), der mit einem Elementträger (3), der die mehreren optischen Elemente trägt, und einer Scheibe (4) versehen ist, die fest mit dem Elementträger (3) verbunden ist, wobei die Scheibe (4) ein Sperrrad ist, das eine Umfangsfläche (5) aufweist, die mit mehreren Sperrmitteln (6) versehen ist, wobei jedes Sperrmittel (6) einem optischen Element entspricht,
- einen Motor (7), der in der Lage ist, die Scheibe (4) drehbar in Bezug auf das Gestell (1) um eine erste Achse in eine so genannte Vorwärtsrichtung und in eine Rückwärtsrichtung anzutreiben; und
- einen harten Anschlag (9), der auf der Umfangsfläche der Scheibe (4) anliegt und in der Lage ist, sich bei der Betätigung des Motors (7) zum Antreiben der Scheibe (4) in die Vorwärtsrichtung durch Bewegung um eine zweite Achse zurückzuziehen, wobei der harte Anschlag (9) in der Lage ist, derart mit einem Sperrmittel (6) in Eingriff gebracht zu werden, dass die Scheibe (4) bei der Betätigung des Motors (7) zum Antreiben der Scheibe (4) in die entgegengesetzte Richtung gesperrt wird,
**dadurch gekennzeichnet, dass** der harte Anschlag (9) ein Antireibungselement (13) umfasst, das derart mit der Umfangsfläche (5) des Sperrrads in Kontakt ist, dass der zurückziehbare Anschlag (9) sich in Abhängigkeit vom Relief der Umfangsfläche (5) des reibungslosen Sperrrads bewegt.

2. Positionierungseinrichtung optischer Elemente mit zurückziehbarem Anschlag nach Anspruch 1, **dadurch gekennzeichnet, dass** das Antireibungselement eine frei um eine Achse drehbare Rolle (13) ist.

3. Positionierungseinrichtung optischer Elemente mit zurückziehbarem Anschlag nach Anspruch 2, **dadurch gekennzeichnet, dass** die Sperrmittel (6) des Sperrrads eine Aussparung (14) mit der Form eines Halbzylinders umfassen, die in der Lage ist, die Einlassung der Rolle (13) in die Aussparung (14) zu ermöglichen, wenn die Scheibe (4) sich in der gesperrten Position befindet.

4. Positionierungseinrichtung optischer Elemente mit zurückziehbarem Anschlag nach einem der Ansprüche 1 bis 3, **dadurch gekennzeichnet, dass** der harte Anschlag (9) an einem seiner Enden und in der Nähe der Rolle (13) eine Kontakthalbkugel (28) umfasst, wobei die Kontakthalbkugel (28) auf der Fläche (29) des Sperrmittels zum Anliegen kommt, wenn die Scheibe (4) sich in der gesperrten Position befindet.

5. Positionierungseinrichtung optischer Elemente mit zurückziehbarem Anschlag nach einem der Ansprüche 1 bis 4, **dadurch gekennzeichnet, dass** der harte Anschlag (9), wenn die Scheibe (4) durch den Eingriff des harten Anschlags (9) und des Sperrmittels (6) in ihrer Position gesperrt ist, durch einen am Gestell (1) befestigten Gegenanschlag (12) derart gegengesperrt ist, dass die Beanspruchung auf der zweiten Achse beseitigt wird, wobei der harte Anschlag (9) dann die Rolle eines Distanzstücks zwischen der Scheibe (4) und dem Gegenanschlag (12) spielt.

6. Positionierungseinrichtung optischer Elemente mit zurückziehbarem Anschlag nach einem der Ansprüche 1 bis 5, **dadurch gekennzeichnet, dass** ein Kontaktgeber (8) den Motor (7) und seine Drehrichtung gemäß der Ausrichtung des Elementträgers (3) steuert.

7. Positionierungseinrichtung optischer Elemente mit zurückziehbarem Anschlag nach Anspruch 6, **dadurch gekennzeichnet, dass** der Motor (7) ein Motor ist, der mit Gleichstrom arbeitet, der zwei Drehrichtungen, eine erste Drehrichtung für die Auswahl des aktiven optischen Elements und eine zweite Drehrichtung für die genaue Ausrichtung des Revolvers (2), erzeugt.

8. Positionierungseinrichtung optischer Elemente mit zurückziehbarem Anschlag nach Anspruch 7, **dadurch gekennzeichnet, dass** der Steuerkreis des Motors eine Diode (36), die mit einem ersten Widerstand (37) parallel geschaltet ist, und einen zweiten Widerstand (38) umfasst, der mit der Baugruppe, die aus dem ersten Widerstand (37) und der Diode (36) gebildet ist, in Reihe geschaltet ist, wobei die Diode (36) den ersten Widerstand (37) für die zweite Drehrichtung derart überbrückt, dass das Haltemoment des Motors (7) verringert wird, wenn die Scheibe (4) gesperrt ist.

9. Spektrometriesystem, das einen Eintrittsspalt, mindestens zwei auszuwählende optische Elemente, eine Austrittsöffnung (18) und Spiegel (21) umfasst, derart, dass ein Lichtstrahl (22), der aus dem Eintrittsspalt (18) kommt, auf einem ausgewählten optischen Element (19) reflektiert und zur Austrittsöffnung (20) geleitet wird,
**dadurch gekennzeichnet, dass** es mindestens eine Positionierungseinrichtung optischer Elemente mit zurückziehbarem Anschlag nach einem der Ansprüche 1 bis 8 umfasst.

10. Spektrometer nach Anspruch 9, **dadurch gekennzeichnet, dass** die optischen Elemente Beugungsgitter sind.

11. Verfahren zur genauen Positionierung eines optischen Elements, das unter mehreren auf einem Elementträger getragenen optischen Elementen ausgewählt wird, mittels der Einrichtung nach einem der Ansprüche 1 bis 8, das einen ersten Schritt, der darin besteht, den Motor zu betätigen, um den Revolver drehbar in die Vorwärtsrichtung anzutreiben, um das aktive optische Element auszusuchen, wobei ein harter Anschlag (9), der auf der Umfangsfläche der Scheibe anliegt, sich dann durch Bewegung um eine zweite Achse zurückzieht, und einen zweiten Schritt umfasst, der darin besteht, den Motor zu betätigen, um die Drehung des Revolvers in die Rückwärtsrichtung anzutreiben,
**dadurch gekennzeichnet, dass** der zurückziehbare Anschlag (9) sich in Abhängigkeit vom Relief der Umfangsfläche (5) des reibungslosen Sperrrads bewegt.

12. Verfahren zur genauen Positionierung eines optischen Elements nach Anspruch 11, **dadurch gekennzeichnet, dass** die Beanspruchung auf der zweiten Achse beseitigt wird, wenn der harte Anschlag zwischen einem Sperrmittel (6) der Umfangsfläche der Scheibe und einem am Gestell befestigten Gegenanschlag (12) in Eingriff kommt, wobei der harte Anschlag (9) dann die Rolle eines Distanzstücks zwischen der Scheibe (4) und dem Gegenanschlag (12) spielt, wobei der Revolver so in einer genauen Position gesperrt wird.
